## Europäisches Patentamt

## European Patent Office

## Office européen des brevets

(11) Veröffentlichungsnummer: **0 593 916 B1**

## EUROPÄISCHE PATENTSCHRIFT

(45) Veröffentlichungstag der Patentschrift: **12.04.95**

(51) Int. Cl.6: **B60G 9/00**

(21) Anmeldenummer: **93115147.6**

(22) Anmeldetag: **21.09.93**

(54) **Hinterachs-Lenkeranordnung bei Fahrzeugen.**

(30) Priorität: **22.10.92 DE 4235632**

(43) Veröffentlichungstag der Anmeldung:
**27.04.94 Patentblatt 94/17**

(45) Bekanntmachung des Hinweises auf die
Patenterteilung:
**12.04.95 Patentblatt 95/15**

(84) Benannte Vertragsstaaten:
**AT DE FR GB IT NL SE**

(56) Entgegenhaltungen:
**DE-A- 1 530 575**    **DE-C- 724 154**
**DE-C- 964 928**    **FR-A- 1 396 781**
**FR-A- 2 049 445**    **FR-A- 2 225 301**

**J.REIMPELL 'Fahrwerkstechnik 1' 1982 , VO-GEL-VERLAG , WÜRZBURG, DE**

**AUTOMOBILTECHNISCHE ZEITSCHRIFT, Bd.70, Nr.1, Januar 1968, STUTTGART, DE Seiten 9 - 12 W. MATSCHINSKY 'Die vierpunktig geführte Starrachse'**

(73) Patentinhaber: **MAN Nutzfahrzeuge Aktienge-sellschaft**
**Postfach 50 06 20**
**D-80976 München (DE)**

(72) Erfinder: **Fuchs, Dietrich, Dr.**
**Schützenstrasse 19**
**D-85757 Karlsfeld (DE)**

## Beschreibung

Die Erfindung bezieht sich auf ein Fahrzeug, insbesondere Nutzfahrzeug, mit einer Hinterachs-Lenkeranordnung, einer gelenkten Vorderachse, einer lenkergeführten starren Hinterachse und einer geneigten Fahrzeug-Wankachse, die das über der Hinterachse gelegene hohe Rollzentrum der Hinterachse mit dem tiefer liegenden Rollzentrum der Vorderachse verbindet, wobei die Hinterachse untere Längslenker und als geschlossener oder aufgelöster Dreieckslenker ausgebildete obere Lenker aufweist.

Ein negatives $\eta$ (Eigenlenkwinkel = Drehung der Achse um die Hochachse) führt unter Wankbewegungen zu einem Untersteuerungsverhalten bei Kurvenfahrt und zu einem - bei Resonanzgeschwindigkeit - die Wankschwingungen aufschaukelnden Eigenlenker der Hinterachse bei Geradeausfahrt.

Eine Achs-Polachse gegenüber dem Aufbau ist die Verbindungslinie zwischen den Lenkerschnittpunkten einer Starrachs-Lenkerführung. Ein solcher Lenkerschnittpunkt kann ein Dreieckslenkerpunkt, ein in der Verlängerung von einem Längslenkerpaar liegender oder ein im Unendlichen liegender Schnittpunkt eines parallelen Längslenkerpaares sein. Um die Achs-Polachse pendelt die Achse gegenüber dem Aufbau bei einfederungsneutralen Achsverschränkungen, sie ist hierbei bestimmend für die Rollrichtung nichtgelenkter Räder auf dieser Achse.

Die Fahrzeug-Wankachse ist die Verbindungslinie zwischen dem Vorderachs- und dem Hinterachs-Rollzentrum; um sie wankt der Aufbau der einfederungsneutralen Wankbewegungen mit dem Wankwinkel "$\Phi$".

Aus der FR 1.396.781 ist ein Fahrzeug gemäß dem Oberbegriff des Anspruchs 1 bekannt, bei dem der Schnittpunkt der Verlängerungslinien der Längslenker oberhalb der Wankachse zu liegen kommt.

Ein torsionssteifer Aufbau führt nur dann für die Achsen eigenlenkneutrale Wankbewegungen "$\Phi$" durch, wenn die Achs-Polachsen mit der Fahrzeug-Wankachse zusammenfallen ($\alpha = \beta$).

Eine Eigenlenkbewegung der Hinterachse unter einem Wankwinkel "$\Phi$" führt so lange zu deren seitlichem Ausscheren, bis sie wieder ihren Geradeauslauf unter entsprechendem Gierwinkel "$\delta$" des ganzen Fahrzeuges gefunden hat ("Dackellauf").

Eine positive Differenz zwischen Fahrzeug-Wankachsneigung und HinterachsPolachsneigung ($\alpha - \beta$) führt unter Wankbewegungen ($\Phi$) zu einem Übersteuerungsverhalten bei Kurvenfahrt und zu einem seitlichen Wegschwimmen der Hinterachse mit einem Gierwinkel "$\delta$" bei Geradeausfahrt. Eine negative Differenz zwischen Fahrzeug-Wankachsneigung und Hinterachs-Polachsneigung ($\alpha - \beta$) führt unter Wankbewegungen "$\Phi$" zu einem Untersteuerungsverhalten bei Kurvenfahrt.

Im nachfolgenden wird der Einfluß der Hinterachs-Polachsneigung im Zusammenspiel mit der Fahrzeug-Wankachsneigung bei Wankbewegungen erläutert: Ein Wankwinkel "$\Phi$" führt gemäß der Fahrzeug-Wankachsneigung "$\alpha$" und der Achs-Polachsneigung "$\beta$" zu einem Eigenlenkwinkel.

$$\eta = \text{arc tan } [\sin(\Phi) \cdot \sin(\alpha-\beta)/\cos(\beta)]$$

für kleine Winkel gilt:

$$\eta \approx \Phi \cdot (\alpha-\beta).$$

Dieser Eigenlenkwinkel entspricht einer Hecklenkung des Fahrzeuges, die bei Geradeausfahrt zu einem Ausscheren des Hecks, bis hin zur völligen Verlagerung des Eigenlenkwinkels "$\eta$" zum Gierwinkel "$\delta$" und bei Kurvenfahrt - je nach Betrag und Vorzeichen - zu einem Über- oder Untersteuern des Fahrzeuges führt.

Mit positivem $\eta$ führt dies bei Geradeausfahrt - z.B. infolge Seitenwind oder Fahrbahnwölbung - zu einem ständig korrekturbedürftigen Schwimmen des Fahrzeuges und bei Kurvenfahrt zu einem lästigen sowie die Fahrsicherheit beeinträchtigenden Übersteuern.

Der Erfindung liegt die Aufgabe zugrunde, während einer Wankneigung die Eigenlenkung der Hinterachse zu minimieren bzw. zu unterbinden.

Dies wird erfindungsgemäß durch eine bei Wankbewegungen eigenlenkneutrale Hinterachs-Lenkeranordnung erreicht, deren untere Längslenker-Verlängerunslinien sich in einem Punkt auf der Wankachse schneiden. Solcherart ergibt sich eine hohe Richtungsstabilität während Wankschwingungen bei Geradeausfahrt infolge Seitenwind und Bodenunebenheiten. Darüber hinauswird eine Kurvenneutralität bei Kurven-Seitenneigung mit minimalem Lenkkorrekturbedarf durch den Fahrer erzielt. Wesentlich auch hinsichtlich der Sicherheit von Fahrgästen und Transportgütern ist die Erhöhung der Fahrsicherheit durch weitgehende Aufrechterhaltung stabiler Fahrzustände.

Die Erfindung ist in einem Ausführungsbeispiel dargestellt und beschrieben.

Es zeigen:

Fig. 1     eine Schemazeichnung über die allgemeinen Zusammenhänge und den Einfluß der Hinterachs-Polachsneigung im Zusammenspiel mit der Fahrzeug-Wankachsneigung bei Wankbewegungen,

Fig. 2     eine Schemazeichnung einer Lenkeranordnung an der Hinterachse in der Seitenansicht,

Fig. 3    eine Schemazeichnung einer Lenkeranordnung an der Hinterachse in der Draufsicht.

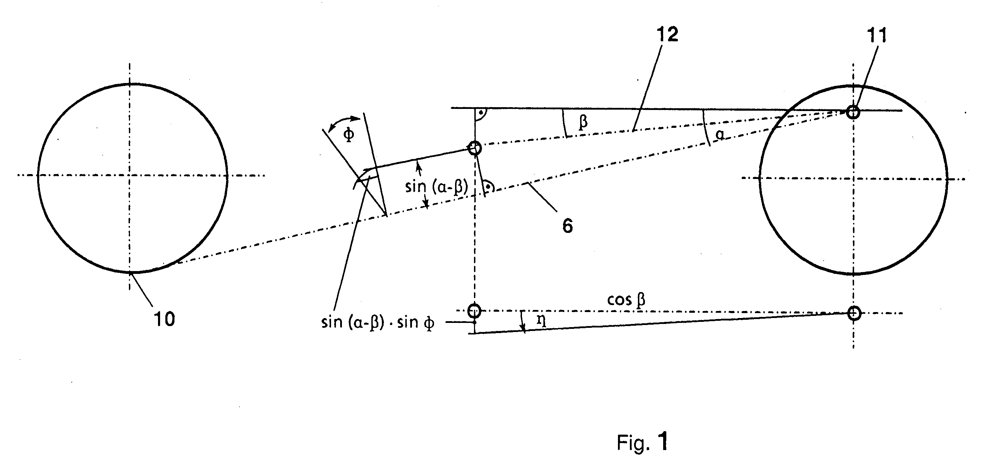

Gemäß Fig. 1 führt ein Wankwinkel „Φ" der Fahrzeug-Wankachsneigung „α" und der Achs-Polachsneigung „β" zu einem Eigenlenkwinkel

$$\eta = \text{arc tan } [\sin(\Phi) \cdot \sin(\alpha-\beta)/\cos(\beta]$$

für kleine Winkel gilt:

$$\eta \approx \Phi \cdot (\alpha-\beta).$$

Dieser Eigenlenkwinkel entspricht einer Necklenkung des Fahrzeugs und führt bei Geradeausfahrt zu einem Ausscheren des Hecks, bis hin zur völligen Verlagerung des Eigenlenkwinkels „η" zum Gierwinkel „δ", und bei Kurvenfahrt -je nach Betrag und Vorzeichen - zu einem Über- oder Untersteuern des Fahrzeugs:
- Übersteuern: $(\alpha-\beta) > 0$
- Untersteuern: $(\alpha-\beta) < 0$.

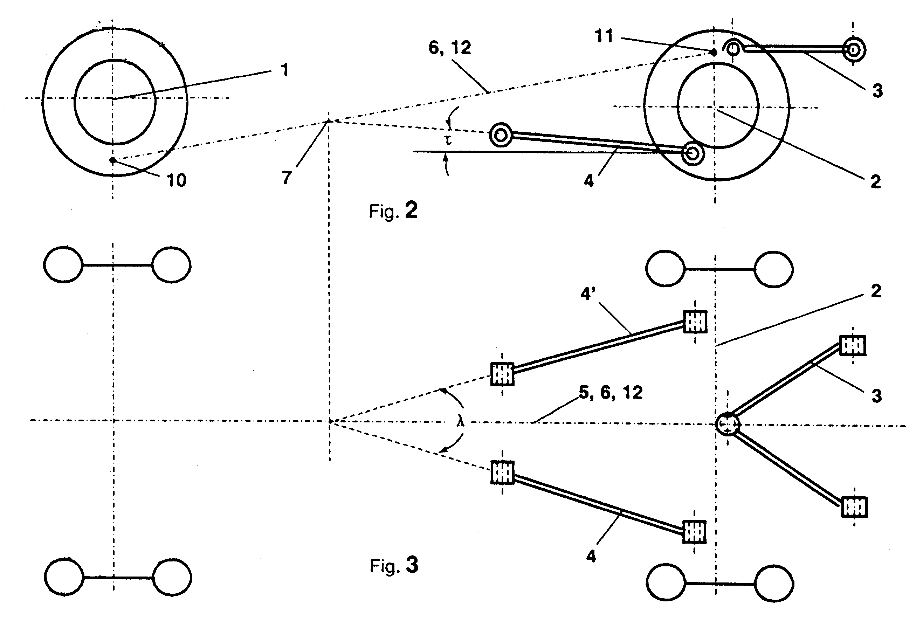

Die Figuren 2 und 3 zeigen die erfindungsgemäße Lenkeranordnung an der Hinterachse 2. Dabei ist an der Hinterachse 2 für die Querführung ein Dreieckslenker 3 angeordnet. Die Längsführung wird sowohl über die unteren Längslenker 4, 4' als auch über den oberen Dreieckslenker 3 erzielt. Die Längslenker sind in der Höhe steigend, sowie schräg zur Fahrzeuglängsmittelebene 5 hin angeordnet. Die Verlängerungslinien der Längslenker 4, 4' schneiden sich in Punkt 7 mit der Fahrzeug-Wankachse 6, die die Verbindungslinie vom tief liegenden VorderachsRollzentrum 10 mit dem oberhalb der Hinterachse 2 gelegenen Hinterachs-Rollzentrum 11 ist. Die Fahrzeug-Wankachse 6 ist hierbei identisch mit der Hinterachs-Polachse 12.

**Bezugszeichenliste**

| | |
|---|---|
| 1 | Vorderachse |
| 2 | Hinterachse |
| 3 | Querlenker, Dreieckslenker |
| 4,4' | Längslenker |
| 5 | Fahrzeuglängsmittelebene |
| 6 | Wankachse |
| 7 | Schnittpunkt |
| 10 | Vorderachs-Rollzentrum |
| 11 | Hinterachs-Rollzentrum |
| 12 | Polachse |
| α | Fahrzeug-Wankachsneigung (vorwärtsfallend „ + ") |
| β | Achs-Polachsneigung (vorwärtsfallend „ + ") |
| δ | Drehung des Fahrzeugs um die Hochachse (Gierwinkel) |
| η | Drehung der Achse um die Hochachse (Eigenlenkwinkel) |
| Φ | Drehung des Aufbaues um die Fahrzeug-Wankachse (Wankwinkel) |
| λ | Pfeilungswinkel der Längslenker |
| τ | Steigungswinkel der Längslenker |

**Patentansprüche**

1. Fahrzeug, insbesondere Nutzfahrzeug, mit einer gelenkten Vorderachse (1), einer lenkergeführten starren Hinterachse (2) und einer geneigten Fahrzeug-Wankachse (6), die das über der Hinterachse gelegene hohe Rollzentrum (11) der Kinterachse mit dem tiefer liegenden Rollzentrum (12) der Vorderachse verbindet, wobei die Hinterachse (2) untere Längslenker (4,4') und als geschlossener oder aufgelöster Dreieckslenker (3) ausgebildete obere Lenker aufweist,
**dadurch gekennzeichnet, daß** die Verlängerungslinien der unteren Längslenker (4,4') sich in einem Punkt (7) mit der Fahrzeug-Wankachse (6) schneiden.

2. Fahrzeug nach Anspruch 1, dadurch gekennzeichnet, daß mit zunehmendem Steigungswinkel (τ) der Längslenker (4,4') zur Erzielung eines Schnittpunktes derer Verlängerungslinien mit der Wankachse auch deren Pfeilungswinkel (λ) wächst.

**Claims**

1. Vehicle, particularly a commercial vehicle, with a steered front axle (1), a rigid rear axle (2) guided by arms, and an oblique roll axis (6) which connects the rear axle's high roll centre (11) located above the rear axle with the front axle's roll centre (12) located at a deeper position, the rear axle (2) being equipped with lower longitudinal arms (4, 4') and upper arms in the form of a closed or opened wishbone (3),
characterised in that the extension lines of the lower longitudinal arms (4, 4') intersect the vehicle roll axis (6) at one point (7).

2. Vehicle according to Claim 1, characterised in that, as the lead angle ( ) of the longitudinal arms (4, 4') increases to achieve an intersection of the extension lines of the longitudinal arms's (4, 4') with the roll axis, the sweep angle ( ) of the longitudinal arms (4, 4'), too, becomes larger.

**Revendications**

1. Véhicule, notamment véhicule utilitaire comportant un essieu avant directeur (1), un essieu arrière (2), rigide, guidé par des bras et un axe de roulis (6) du véhicule incliné, gui relie le centre de roulis (11) de l'essieu arrière situé en hauteur au-dessus de l'essieu arrière et le centre de roulis (12) de l'essieu avant, situé plus bas, l'essieu arrière (2) comportant des bras longitudinaux inférieurs (4, 4') et des bras triangulaires (3) fermés ou ouverts formant les bras supérieurs,
caractérisé en ce que les prolongements des bras longitudinaux inférieurs (4, 4') se coupent en un point (7) correspondant à l'axe de roulis (6) du véhicule.

2. Véhicule selon la revendication 1, caractérisé en ce gu'avec l'augmentation de l'angle de pente (τ) des bras longitudinaux (4, 4'), pour avoir un point d'intersection de leur prolongement avec l'axe de roulis, l'angle de flèche (λ) augmente également.

Fig. 1

Fig. 2

Fig. 3

EP 0 593 916 B1